**Europäisches Patentamt**

**European Patent Office**

**Office européen des brevets**

(11) Veröffentlichungsnummer : **0 093 790
B1**

(12) **EUROPÄISCHE PATENTSCHRIFT**

(45) Veröffentlichungstag der Patentschrift :
27.07.88

(51) Int. Cl.⁴ : **F 16 D 69/02**

(21) Anmeldenummer : **82104055.7**

(22) Anmeldetag : **11.05.82**

(54) Reibbelag für Reibungskupplungen.

(43) Veröffentlichungstag der Anmeldung :
16.11.83 Patentblatt 83/46

(45) Bekanntmachung des Hinweises' auf die Patenterteilung : 27.07.88 Patentblatt 88/30

(84) Benannte Vertragsstaaten :
AT BE CH DE FR GB IT LI LU NL SE

(56) Entgegenhaltungen :
FR-A- 2 359 323
FR-A- 2 446 267

(73) Patentinhaber : **Raybestos Industrie-Produkte GmbH**
**Bahnstrasse 48-50**
**5608 Radevormwald (DE)**

(72) Erfinder : **Wagner, Günter**
**Suerlandweg 15**
**D-4740 Oelde 1 (DE)**

(74) Vertreter : **Türk, Gille, Hrabal**
**Bruckner Strasse 20**
**D-4000 Düsseldorf 13 (DE)**

**Beschreibung**

Die Erfindung betrifft einen Reibbelag für Reibungskupplungen, der aus einer aus aus einem homogenen Gemisch von kurzen Fasern, Bindemittel und Belagmaterialien extrudierten Strängen gewickelten gehärteten ringförmigen Scheibe mit Oberflächen besteht, die durch spanende Bearbeitung geglättet sind.

Es ist bekannt, Reibbeläge für Reibungskupplungen dadurch herzustellen, daß man Belagmaterialien mit einem Bindemittel zu einem niedrigviskosen Gemisch vermischt und mit diesem Gemisch ein zuvor hergestelltes textiles Garn tränkt. Nachdem das so getränkte bzw. imprägnierte Garn ausreichend abgetrocknet ist, werden mehrere derartige Garne zu einem flachen Strang oder Band vereinigt einer Wickelvorrichtung zugeführt, welche diesen Strang oder dieses Band wellenförmig zu einem Reibbelagrohling wickelt, indem mehrere Lagen aus gegeneinander versetzten Wellen gelegt werden. Der so erzeugte Rohling wird getrocknet, wobei die flüchtigen Bestandteile des Lösungsmittels entweichen, woraufhin er in einer besonderen Preßform heißgepreßt wird und dabei aushärtet. Zum Schluß werden die Oberflächen des Rohlings abgeschliffen, wodurch ein Reibbelag mit glatter und gleichförmiger Oberfläche entsteht.

Diese bekannte Art der Herstellung von Reibbelägen für Reibungskupplungen ist verhältnismäßig aufwendig und dementsprechend kostspielig, weil die Herstellung und die Verarbeitung des in den Belagmaterialien einzubettenden Garnmaterials mehrere Arbeitsschritte und damit mehrere Behandlungsstufen erfordert. Andererseits lassen sich Ungleichförmigkeiten der Verteilung der textilen Fasern im Belagmaterial aufgrund der eingearbeiteten Garne nicht vermeiden.

Bei einem bekannten Reibbelag für Reibungskupplungen (FR-A-2 359 323) besteht die ringförmige Scheibe aus einem oder mehreren in einer Ebene spiralförmig gewickelten Strängen, welche Asbestfasern enthalten. Asbestfasern sind nicht nur gesundheitsschädlich und daher abzulehnen, sondern haben auch eine verhältnismäßig große Länge, so daß sie sich beim Auspressen der Stränge in Längsrichtung derselben orientieren, was zu einer ungleichförmigen Verteilung der Fasern im fertigen Reibbelag führt. Auch besteht die Gefahr von Ablösungen zwischen den Fasern und dem sie umgebenden Material der Stränge. Da die Stränge spiralförmig in einer Ebene gewickelt sind und, wenn zwei Lagen von Strängen vorgesehen sind, die einzelnen Windungen der Stränge übereinander liegen, sind weitere Ungleichförmigkeiten in der Materialverteilung zu befürchten und ist die Gefahr von Ablösungserscheinungen noch verstärkt.

Der Erfindung liegt die Aufgabe zugrunde, einen Reibbelag für Reibungskupplungen zu schaffen, der trotzdem einfach herzustellen ist, eine bessere Qualität als bekannte Reibbeläge hat und der asbestfrei ist.

Diese Aufgabe wird erfindungsgemäß dadurch gelöst, daß die Fasern textile Stapelfasern mit einer Länge von etwa 6 mm, d. h. Stapelfasern der Größenordnung PMS (Papermaker Staple Fibers), sind und daß die Stränge in mehreren Lagen wellenförmig zu der ringförmigen Scheibe gewickelt sind.

Die textilen Fasern sind beim erfindungsgemäßen Reibbelag also nicht in Form von Garnen oder Fäden eingearbeitet, sondern bestehen aus Stapelfasern, welche in das aus Bindemittel und Belagmaterialien gebildete Gemisch eingearbeitet und damit in diesem Gemisch homogen verteilt sind. Man erreicht dadurch eine absolut homogene Verteilung zwischen Belagmaterialien und textilen Fasern, so daß der fertige Reibbelag keine Inhomogenitäten aufweist, sondern über seine gesamte Fläche und seinen gesamten Querschnitt gleichförmig ausgebildet ist. Fasern dieser Länge sind bisher als Verstärkungen für Reibbeläge nicht benutzt worden.

Das aus Belagmaterialien, Bindemittel und Stapelfasern bestehende Gemisch kann ohne Zwischenlagerung unmittelbar zu dem Reibbelag-Rohling gelegt bzw. verarbeitet werden, so daß eine äußerst wirtschaftliche Herstellung möglich ist. Das zu den Strängen zu verarbeitende Gemisch kann ein hochviskoses Gemisch sein, d. h. man benötigt weniger Bindemittel als bisher, was Kosteneinsparungen bringt, während andererseits die Trockenzeiten kürzer sind, wodurch die Produktionszeiten verkürzt und zum Trocknen erforderliche Energiekosten gesenkt werden.

Beispielsweise werden die kurzen Stapelfasern zunächst in einem Hochleistungsmischer aufgebauscht, während parallel dazu das Bindemittel mit den Belagmaterialien zu einem Vorgemisch vermischt wird. Daraufhin gibt man das Vorgemisch und die Stapelfasern zusammen und vermischt diese zu dem Gemisch, aus denen dann die Stränge hergestellt und zu den Reibbelag-Rohlingen gelegt werden. Die mit dem Vorgemisch vermischten Stapelfasern können anschließend zerkleinert werden.

Zweckmäßig werden die aus dem die Stapelfasern enthaltenden Gemisch bestehenden Stränge mittels einer Strangpresse hergestellt. Das Gemisch wird dabei in der Strangpresse komprimiert und von der Strangpresse zu dem bzw. den Strängen ausgepreßt. Über eine der Strangpresse nachgeordnete Zahnradpumpe lassen sich die aus dem Gemisch bestehenden Stränge optimal dosiert herstellen. Diese Stränge werden dann einzeln oder zu mehreren in der unmittelbar an die Zahnradpumpe anschließenden Wickelvorrichtung zu dem ringscheibenförmigen Reibbelag-Rohling gelegt. Die so erzeugten Rohlinge werden anschließend, wie bekannt, getrocknet und in einer bekannten Preßform heißgepreßt und durch eine Nachvulkanisation der vulkanisierbaren Bestandteile der Belagmaterialien ausgehärtet. Danach erfolgt die Endbearbeitung durch Abschleifen der Oberflächen, um den fertigen Reibbelag zu erhalten.

Durch die Vermischung von Belagmaterialien mit Bindemittel und Stapelfasern erhält man ein ursprünglich regelloses, den Belastungen entsprechend ausgerichtetes Material, dessen optimal dosierbare Masse kontinuierlich zu Reibbelag-Rohlingen verarbeitet werden kann, so daß zur Fertigstellung der Reibbelag-Rohlinge maximal drei Arbeitsschritte erforderlich sind, was äußerst wirtschaftlich ist.

Die Reibbeläge enthalten wegen der wellenförmigen Wicklung bzw. Legung der extrudierten Stränge oder Bänder in mehreren Lagen kurze textile Fasern wie Stapelfasern in der für die gewünschte Verstärkungswirkung optimalen Orientierung.

Das Gemisch, aus dem die Stränge oder Bänder zum Herstellen der Reibbelag-Rohlinge stranggepreßt werden, wird beispielsweise wie folgt hergestellt:

Zunächst wird ein Vorgemisch erzeugt, das zu ca. 18 % aus Bindemittel, zu ca. 15 % aus Elastomeren, zu ca. 8 % aus Vulkanisationsmitteln, zu ca. 10 % aus Metalloxiden, zu ca. 10 % aus Metallen und zu ca. 40 % aus Füllstoffen besteht. Parallel dazu werden kurze Fasern mit einer Stapellänge von etwa 6 mm in einem Hochleistungsinnenmischer aufgebauscht. Dann wird ein Hauptgemisch aus 80 % der Vormischung, 10 % der vorbereiteten Fasern und 10 % Füllstoffen plus kleine Mengen weiterer Füllstoffe erzeugt. Wenn dieses Hauptgemisch nach ausreichender Mischzeit die gewünschte Homogenität hat, wird es in die Strangpresse eingegeben und in dieser komprimiert, wobei die Fasern beim Auspressen der Stränge oder Bänder orientiert werden.

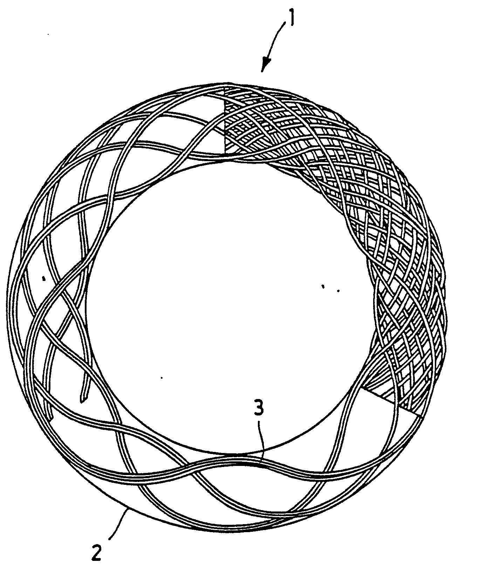

In der Zeichnung ist schematisch eine Draufsicht auf einen erfindungsgemäß hergestellten Reibbelag dargestellt.

Der Reibbelag 1 besteht aus einer Ringscheibe 2, welche aus in mehreren Lagen gewickelten bzw. gelegten Strängen 3 aus stranggepreßtem Material gebildet ist. In der Zeichnung ist jeder Strang 3 aus drei einzelnen Strängen gebildet, die in den einzelnen Lagen einander überlappend wellenförmig verlaufen. Nach dem Heißpressen und Aushärten des Rohlings und nach der spanenden Oberflächenbearbeitung sind die einzelnen Stränge 3 am fertigen Reibbelag 1 nicht mehr erkennbar. Vielmehr hat der Reibbelag 1 eine homogene und glatte Oberfläche.

## Patentansprüche

1. Reibbelag für Reibungskupplungen, bestehend aus einer aus aus einem homogenen Gemisch von kurzen Fasern, Bindemittel und Belagmaterialien extrudierten Strängen (3) gewickelten gehärteten ringförmigen Scheibe (2) mit Oberflächen, die durch spanende Bearbeitung geglättet sind, dadurch gekennzeichnet, daß die Fasern textile Stapelfasern mit einer Länge von etwa 6 mm sind und daß die Stränge (3) in mehreren Lagen wellenförmig zu der Scheibe (2) gewickelt sind.

2. Reibbelag nach Anspruch 1, dadurch gekennzeichnet, daß die Stränge (3) aus einem Gemisch bestehen, das aus 80 % eines hochviskosen Vorgemisches folgender Zusammensetzung

Bindemittel ca. 18 %
Elastomere ca. 15 %
Vulkanisationsmittel ca. 8 %
Metalloxide ca. 10 %
Metalle ca. 10 %
Füllstoffe ca. 40 %

mit 10 % aufgebauschten Stapelfasern und 10 % Füllstoffen gebildet ist.

## Claims

1. Friction lining for friction couplings, consisting of a cured annular disc (2) being wound of extruded cords (3) consisting of a homogeneous mixture of short fibers, bonding agent and lining materials and having surfaces smoothed by cutting machining, characterized in that said fibers are textile staple fibers having a length of about 6 mm and that the cords (3) are wound in several coats undulatory to form the disc (2).

2. Friction lining according to claim 1, characterized in that said cords (3) consist of a mixture, which is formed of 80 % of a highly viscose premixture of following composition

bonding agent c. 18 %
elastomers c. 15 %
vulcanisation agent c. 8 %
metal oxides c. 10 %
metals c. 10 %
fillers c. 40 %

and 10 % puffed staple fibers and 10 % fillers.

## Revendications

1. Garniture de friction pour des accouplements à friction, constituée d'un disque annulaire (2) bobiné et ayant fait prise, qui est lui-même constitué de boudins (3) extrudés à partir d'un mélange homogène de fibres courtes, de liant et de matériaux pour garnitures, et qui présente des surfaces qui sont rendues lisses par un usinage avec enlèvement de matière, caractérisée en ce que les fibres sont des fils textiles coupés d'une longueur d'environ 6 mm; et en ce que les boudins (3) sont bobinés en plusieurs couches en forme ondulée pour donner le disque (2).

2. Garniture de friction selon la revendication 1, caractérisée en ce que les boudins (3) sont constitués d'un mélange obtenu à partir de 80 % d'un mélange préalable à haute viscosité de la composition suivante :

liant env. 18 %
élastomères env. 15 %
agents de vulcanisation env. 8 %
oxydes métalliques env. 10 %
métaux env. 10 %
charges env. 40 %

avec 10 % de fils coupés gonflés et 10 % de charges.